# FASCICULE DE BREVET EUROPEEN

(11) **EP 0 458 671 B1**
(45) Date de publication et mention de la délivrance du brevet: **26.04.1995**
(21) Numéro de dépôt: 91401209.1
(22) Date de dépôt: 07.05.1991
(51) Int. Cl.: G02B 6/36, H01P 1/00

(54) **Joint tournant mixte hyperfréquence et optique**
Drehkupplung für optische und hohe Frequenzen
Mixed high-frequency and optical rotary joint

(30) Priorité: 22.05.1990 FR 9006385
(43) Date de publication de la demande: 27.11.1991
(73) Titulaire: THOMSON-CSF, 75008 Paris (FR)
(72) Inventeur: Andrieu, François, F-92045 Paris la Défense (FR); Jacquemet, André, F-92045 Paris la Défense (FR); Gerard, Philippe, F-92045 Paris la Défense (FR)
(74) Mandataire: Beylot, Jacques

(56) Documents cités:
- EP-A- 0 107 035
- US-A- 4 298 850
- PATENT ABSTRACTS OF JAPAN, vol. 10, no. 290 (P-503)[2346], 2 octobre 1986;& JP-A-61 110 105
- PATENT ABSTRACTS OF JAPAN, vol. 11, no. 45 (P-546)[2492], 10 février 1987;& JP-A-61 213 806

## Description

La présente invention concerne les joints tournants permettant de transmettre des signaux hyperfréquences par exemple entre une tête haute fréquence de radar placée dans une tourelle en rotation par rapport à un bâti et les autres circuits du radar logés dans le bâti.

Ce genre de joint tournant hyperfréquence décrit par exemple dans le brevet américain US-A 4 298 850 est associé en général à un joint tournant électrique à collecteur à bagues permettant l'alimentation électrique à partir du bâti des équipements placés en tourelle et l'échange de divers signaux électriques d'information entre les équipements logés dans la tourelle et dans le bâti.

La transmission des signaux électriques d'information par l'intermédiaire des bagues du collecteur du joint tournant électrique est délicate car elle est sensible aux parasites engendrés par les contacts par balais et par la proximité des courants d'alimentation. Elle nécessite la prise de nombreuses précautions:
- contacts par plusieurs balais;
- protection contre les oxydations afin d'éviter les défauts de contact;
- répartition judicieuse des bagues de puissance sur le collecteur afin de limiter le parasitage des signaux électriques d'information et d'interdire, en cas de défaillance mécanique, une possibilité de contact entre les bagues de puissance et les fils véhiculant les signaux électriques d'information;
- dispositions prises pour un retour de masse de bonne qualité. Toutes ces précautions ont pour effet de rendre le joint tournant électriques lourd et encombrant. En outre, le débit possible pour les échanges d'informations par l'intermédiaire d'un signal électrique reste limité ce qui peut conduire à multiplier les voies de communications et à accroître encore l'encombrement du joint tournant électrique.

On connaît par ailleurs, notamment par la demande de brevet européen EP-A-0 107 035, des joints tournants à fibre optique qui permettent de transmettre des signaux d'information à grand débit sans être sensible au parasitage et aux crachements des bagues de puissance mais ces joints tournants exclusivement optiques ne peuvent pas être montés dans les joints tournants hyperfréquence connus car ils nécessitent, comme ces derniers, un libre accès à l'axe de rotation.

La présente invention a pour but de remédier aux inconvénients précités en modifiant un joint tournant hyperfréquence de manière à rendre possible sa combinaison avec un joint tournant optique avec une fibre optique.

La présente invention a pour objet un joint tournant mixte hyperfréquence et optique comportant une partie dite fixe; une partie dite tournante en rotation autour d'un axe Δ par rapport à la partie fixe, ladite partie tournante étant située dans le prolongement de la partie fixe; au moins une paire d'arrivées de guide hyperfréquence disposée l'une dans la partie fixe, l'autre dans la partie tournante et couplées entre elles par une liaison coaxiale disposée dans un conduit axial traversant les parties fixe et tournante selon l'axe de rotation Δ, ladite liaison coaxiale étant pourvue d'une âme conductrice qui a une première extrémité fixée dans la partie tournante et une deuxième extrémité coulissant en rotation dans la partie fixe, et qui présente un canal la traversant longitudinalement de part en part selon l'axe de rotation Δ; une fibre optique solidaire de la partie tournante qui s'étend dans ledit canal axial de l'âme conductrice de la liaison coaxiale au moins jusqu'à ladite deuxième extrémité de l'âme conductrice qui coulisse en rotation dans la partie fixe; et un moyen de couplage optique qui est solidaire de la partie fixe et qui est centré sur l'axe de rotation Δ en regard de l'extrémité de la fibre optique située au voisinage de ladite deuxième extrémité de l'âme conductrice coulissant en rotation dans la partie fixe.

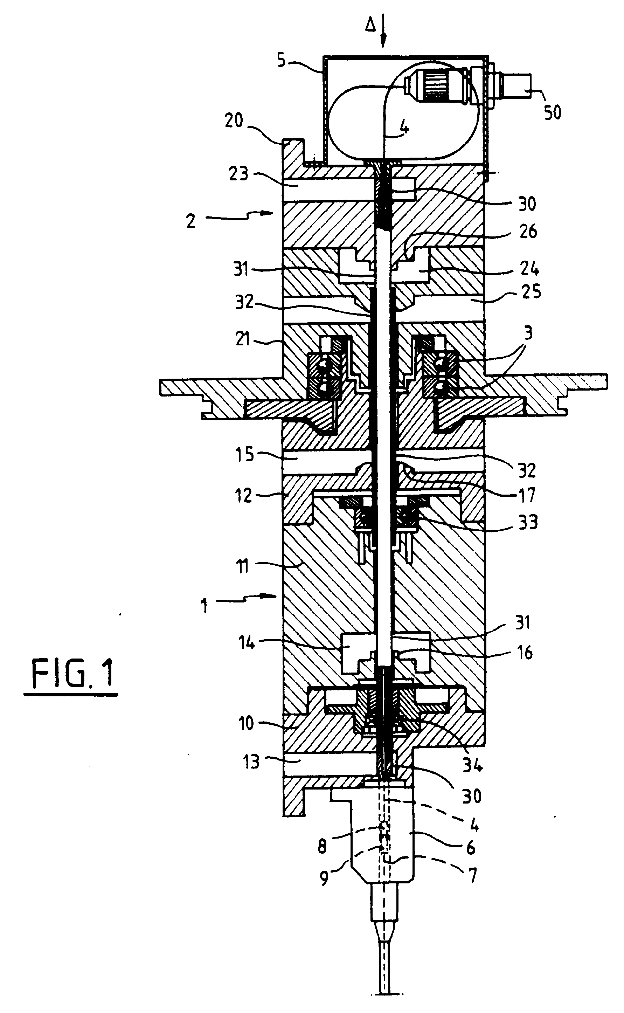

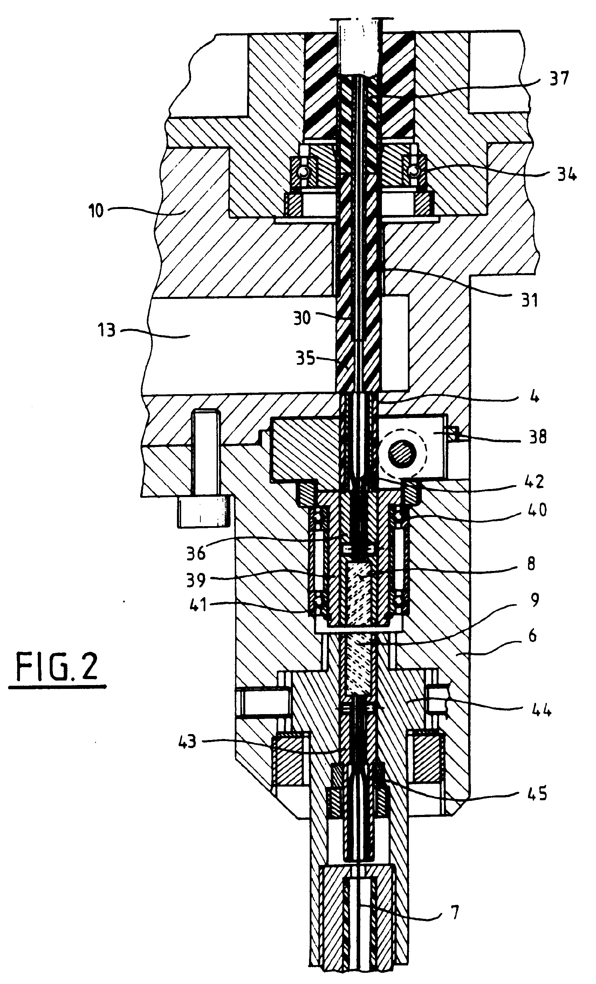

D'autres caractéristiques et avantages de l'invention ressortiront de la description ci-après d'un mode de réalisation donné à titre d'exemple. Cette description sera faite en regard du dessin dans lequel:
- une figure 1 est une vue en coupe longitudinale partielle d'un joint tournant mixte hyperfréquence et optique selon l'invention et
- une figure 2 est une vue en coupe longitudinale détaillant la partie inférieure consacrée au couplage optique du joint tournant mixte vu à la figure 1.

Le joint tournant mixte représenté à la figure 1 assure l'acheminement de trois voies hyperfréquences distinctes et d'une voie optique. Il comporte deux parties dans le prolongement l'une de l'autre et en rotation l'une par rapport à l'autre, l'une 1 dite fixe et l'autre 2 dite tournante.

Les parties fixe 1 et tournante 2 sont accouplées à l'aide de roulements à billes 3 leur permettant de tourner l'une par rapport à l'autre autour d'un axe longitudinal, vertical commun Δ.
La partie fixe 1 est formée d'un empilement de trois pièces métalliques 10, 11, 12, percées d'un conduit axial centré sur l'axe de rotation Δ et de trois arrivées latérales superposées 13, 14, 15 de guide d'ondes rectangulaires rejoignant le conduit axial.

La partie tournante 2 est composée d'un empilement de deux pièces métalliques 20, 21 percées d'un conduit axial centré sur l'axe de rotation Δ et de trois arrivées latérales superposées 23, 24, 25 de guide d'ondes rectangulaires rejoignant le conduit axial.

Une liaison coaxiale disposée dans les conduits axiaux des parties fixe 1 et tournante 2 assure les couplages entre les arrivées de guide d'ondes des parties fixe 1 et tournante 2 correspondant à une même voie. Elle comporte trois conducteurs concentriques : une âme 30 et deux gaines conductrices 31 et 32 isolés entre elles et de la paroi des conduits . L'âme 30 relie entre elles les arrivées de guide d'ondes 13 et 23 les plus éloignées des parties fixe 1 et tournante 2. Ses extrémités dépassent dans celles-ci à la manière d'une antenne pour assurer les couplages hyperfréquences. La première gaine conductrice 31 plus courte que l'âme 30 relie électriquement deux obstacles de couplage à profil en "bouton de porte" 16, 26 disposés en relief sur les faces en vis à vis des arrivées intermédiaires 14 et 24 de guide d'ondes des parties fixe 1 et tournante 2 pour assurer leur couplage hyperfréquence. La deuxième gaine conductrice 32 qui entoure la première 31 et l'âme 30 est plus courte que ces deux dernières. Elle relie électriquement deux obstacles de couplage à profil en "bouton de porte" 17 et 27 disposés en relief sur les faces en vis à vis des arrivées 15 et 25 de guide d'ondes les plus proches des parties fixe 1 et tournante 2 pour assurer leur couplage hyperfréquence. La liaison coaxiale est fixée par une extrémité dans la partie tournante 2 et coulisse en rotation dans la partie fixe 1 où son guidage est assuré par deux roulements à billes 33 et 34.

Dans chaque voie hyperfréquence, le signal se propage en mode fondamental TE10 dans les arrivées de guide d'ondes et en mode TEM dans la liaison coaxiale où la propagation se fait par les conducteurs concentriques 30, 31, 32 par effet de peau. C'est la symétrie de ce dernier mode TEM qui autorise la rotation.

L'âme 30 de la liaison coaxiale est percée d'un canal axial centré sur l'axe de rotation Δ permettant le passage d'une fibre optique 4 au travers des parties tournante 2 et fixe 1. Cette fibre optique 4 qui est solidaire de la partie tournante 2 et de la liaison coaxiale provient d'un boîtier supérieur 5 fixé à la partie tournante 2 où elle est raccordée à un élément de connecteur optique 50. Elle émerge en dessous de la partie fixe 1 dans un boîtier inférieur 6 fixé à cette dernière où son extrémité est couplée à celle d'une autre fibre 7 par l'intermédiaire de lentilles de couplage 8 et 9 élargissant le faisceau lumineux au droit d'un plan de rotation optique pour atténuer les effets des défauts d'alignement et d'éloignement des extrémités des deux fibres 4 et 7 en rotation l'une par rapport à l'autre.

La figure 2 détaille la constitution du joint tournant mixte au niveau du boîtier inférieur 6 solidaire de la partie fixe 1, qui contient le plan de rotation de la liaison optique. On y distingue la pièce métallique 10 qui constitue la partie inférieure de la partie fixe 1 et qui est percée d'un conduit axial centré sur l'axe de rotation Δ et de l'arrivée transversale de guide d'ondes 13, la partie inférieure de la liaison coaxiale enfilée dans le conduit axial avec sa première gaîne métallique 31 qui s'arrête au débouché du conduit axial dans l'arrivée de guide d'ondes 13 et l'extrémité de son âme métallique 30 qui dépasse à la manière d'une antenne dans l'arrivée de guide d'ondes 13, ainsi que le roulement à billes inférieure 34 qui assure le guidage en rotation de la liaison coaxiale à l'intérieur de la partie fixe 1.

La liaison coaxiale est prolongée vers l'intérieur du boîtier inférieur 6 solidaire de la partie fixe 1, jusqu'au niveau du plan de rotation optique par une tige creuse supportant à son extrémité la lentille de couplage 8. Cette tige creuse est constituée d'un manchon isolant 35 prolongé d'un embout creux 36. Le manchon isolant 35 a son extrémité emboîtée entre l'âme 30 et la première gaîne métallique 31 et prolonge l'isolant tubulaire 37 qui les sépare. Il assure le franchissement de la paroi inférieure de la pièce métallique 10 et pénètre dans le boîtier inférieur 6. L'emboût 36 a son extrémité emboîtée dans le manchon isolant 35 et fixée à celui-ci par un collier de serrage 38. Il est disposé dans une douille 39 guidée en rotation à l'intérieur du boîtier inférieur 6 par deux roulement à billes superposés 40 et 41. Il porte à son extrémité libre la lentille de couplage 8 et contient une pièce tubulaire de centrage 42 permettant de guider l'extrémité de la fibre optique 4 sur l'axe de la lentille de couplage 8.

La fibre optique 4 qui est couplée à l'élément de connecteur 50 fixé au boîtier supérieur 5 solidaire de la partie tournante 2 suit depuis le boîtier supérieur 5 le canal axial de l'âme 30 de la liaison coaxiale et poursuit son chemin à l'intérieur du manchon isolant 35 et de la pièce tubulaire de centrage 42 pour venir au contact de la lentille de couplage 8.

La lentille de couplage 9 est placée en vis à vis de la lentille de couplage 8, de l'autre côté du plan de rotation optique. Elle est portée par un embout 43 emboîté dans une pièce d'ancrage 44 assurant sa fixation au boîter inférieur 6 solidaire de la partie fixe 1. Cet embout 43 renferme une pièce tubulaire de centrage 45 guidant l'extrémité de la fibre optique 7 qui est solidaire de la partie fixe 1 sur l'axe de la lentille du couplage 9.

## Revendications

1. Joint tournant mixte hyperfréquence et optique comportant une partie dite fixe (1); une partie dite tournante (2) en rotation autour d'un axe Δ par rapport à la partie fixe (1), ladite partie tournante étant située dans le prolongement de la partie fixe; au moins une paire d'arrivées de guide hyperfréquence disposée l'une (13, 14, 15) dans la partie fixe (1), l'autre (23, 24, 25) dans la partie tournante (2) et couplées entre elles par une liaison coaxiale (30, 31, 32) disposée dans un conduit axial traversant les parties fixe et tournante (1, 2) selon l'axe de rotation Δ, ladite liaison coaxiale étant pourvue d'une âme conductrice (30) qui a une première extrémité fixée dans la partie tournante (2) et une deuxième extrémité coulissant en rotation dans la partie fixe (1), et qui présente un canal la traversant longitudinalement de part en part selon l'axe de rotation Δ; une fibre optique (4) solidaire de la partie tournante (2) qui s'étend dans ledit canal axial de l'âme conductrice (30) de la liaison coaxiale au moins jusqu'à ladite deuxième extrémité de l'âme conductrice qui coulisse en rotation dans la partie fixe; et un moyen de couplage optique (9, 7) qui est solidaire de la partie fixe (1) et qui est centré sur l'axe de rotation Δ en regard de l'extrémité de la fibre optique (4) située au voisinage de ladite deuxième extrémité de l'âme conductrice coulissant en rotation dans la partie fixe.

2. Joint tournant selon la revendication 1, dans lequel ledit moyen de couplage optique comporte une fibre optique (7) solidaire de la partie fixe (1) dont une extrémité vient en regard de l'extrémité de la fibre optique (4) solidaire de la partie tournante (2).

3. Joint tournant selon la revendication 2, dans lequel deux lentilles de couplage optique (8, 9) sont intercalées entre les extrémités en regard des fibres optiques (4, 7) respectivement solidaires des parties tournante et fixe (2, 1).

4. Joint tournant selon la revendication 3, dans lequel la lentille de couplage optique (8) disposée devant l'extrémité de la fibre optique (4) solidaire de la partie tournante (2) est portée par une tige creuse (35, 36) prolongeant la liaison coaxiale (30, 31, 32) en direction de la partie fixe (1).

5. Joint tournant selon la revendication 4, dans lequel la tige creuse est constituée d'un manchon isolant (35) emboîté par son extrémité dans la liaison coaxiale (30, 31, 32) et d'un embout creux (36) emboîté par son extrémité dans le manchon isolant (35) et fixé à celui-ci par un collier de serrage (38).

6. Joint tournant selon la revendication 5, dans lequel l'embout creux (36) emboîté par son extrémité dans le manchon isolant (35) prolongeant la liaison coaxiale (30, 31, 32) renferme une pièce tubulaire de centrage (42) guidant l'extrémité de la fibre optique (4) solidaire de la partie tournante (2) sur l'axe de ladite lentille de couplage optique (8).

7. Joint tournant selon la revendication 3, dans lequel la lentille de couplage optique (9) disposée devant l'extrémité de la fibre optique (7) solidaire de la partie fixe (1) est portée par un embout creux (43) qui est emboîté dans une pièce d'ancrage (44) fixée à la partie fixe (1) par l'intermédiaire d'un boîtier (6) et qui renferme une pièce tubulaire de centrage (45) guidant l'extrémité de la fibre optique (7) solidaire de la partie fixe (1) sur l'axe de ladite lentille de couplage optique (9).

## Patentansprüche

1. Gemischte Drehkupplung für Mikrowellen und optische Signale, mit einem feststehenden Teil (1), einem um eine Achse Δ bezüglich des feststehenden Teils (1) drehbaren Teil (2), der sich in der Verlängerung des feststehenden Teils befindet, mit mindestens einem Paar von Mikrowellenleiter-Einlässen, von denen der eine (13, 14, 15) im feststehenden Teil (1) und der andere (23, 24, 25) im drehbaren Teil (2) liegt und die miteinander durch eine koaxiale Verbindung (30, 31, 32) gekoppelt sind, die sich in einem den feststehenden Teil (1) und den drehbaren Teil (2) entlang der Drehachse Δ durchquerenden axialen Kanal befindet, wobei die koaxiale Verbindung eine leitende Seele (30) aufweist, die ein erstes im drehbaren Teil (2) befestigtes Ende und ein zweites in Drehrichtung im feststehenden Teil (1) gleitendes Ende sowie eine Kanal aufweist, der die Seele in Längsrichtung entlang der Drehachse Δ ganz durchquert, mit einer Lichtleitfaser (4), die im drehbaren Teil (2) festliegt und sich in den axialen Kanal der leitenden Seele (30) der koaxialen Verbindung zumindest bis zum zweiten Ende der drehend im feststehenden Teil gleitenden Seele erstreckt, und mit einem optischen Kopplungsmittel (9, 7), das mit dem feststehenden Teil (1) fest verbunden ist und auf die Drehachse Δ gegenüber dem Ende der Lichtleitfaser (4) zentriert ist, die sich in der Nähe des zweiten Endes der in Drehrichtung im feststehenden Teil gleitenden leitenden Seele befindet.

2. Drehkupplung nach Anspruch 1, in der das optische Kopplungsmittel eine Lichtleitfaser (7) enthält, die mit dem feststehenden Teil (1) fest verbunden ist und mit einem Ende dem Ende der Lichtleitfaser (4) des drehbaren Teils (2) gegenüberliegt.

3. Drehkupplung nach Anspruch 2, in der zwei optische Kopplungslinsen (8, 9) zwischen die einander gegenüberliegenden Enden der Lichtleitfasern (4, 7) des drehbaren bzw. feststehenden Teils (2, 1) eingefügt sind.

4. Drehkupplung nach Anspruch 3, in der die optische Kopplungslinse (8), die vor dem Ende der Lichtleitfaser (4) des drehbaren Teils (2) liegt, in einem Hohlstab (35, 36) gehalten wird, der die koaxiale Verbindung (30, 31, 32) in Richtung auf den feststehenden Teil (1) verlängert.

5. Drehkupplung nach Anspruch 4, in der der Hohlstab aus einer Isolierhülle (35), die mit ihrem Ende in der koaxialen Verbindung (30, 31, 32) steckt, und aus einem hohlen Endstück (36) besteht, das mit seinem Ende in die Isolierhülle (35) gesteckt ist und an dieser durch einen Spannring (38) befestigt ist.

6. Drehkupplung nach Anspruch 5, in der das hohle Endstück (38), das mit seinem Ende in die die koaxiale Verbindung (30, 31, 32) verlängernde Isolierhülle (35) gesteckt ist, ein rohrförmiges Zentrierstück (42) umschließt, das das Ende der Lichtleitfaser (4) des drehbaren Teils (2) bezüglich der Achse der optischen Kopplungslinse (8) führt.

7. Drehkupplung nach Anspruch 3, in der die optische Kopplungslinse (9), die vor dem Ende der Lichtleitfaser (7) des feststehenden Teils (1) sitzt, von einem hohlen Endstück (43) getragen wird, das in ein Verankerungsstück (44) des feststehenden Teils (1) über ein Gehäuse eingesteckt ist und ein rohrförmiges Zentrierstück (45) umgibt, das das Ende der Lichtleitfaser (7) des feststehenden Teils (1) bezüglich der optischen Kopplungslinse (9) führt.

## Claims

1. Combined UHF and optical turning joint including a part called fixed part (1), a part called turning part (2) in rotation about an axis Δ with respect to the fixed part (1), the said turning part being situated in the extension of the fixed part; at least one pair of UHF-guide inlets, one (13, 14, 15) arranged in the fixed part (1), the other (23, 24, 25) in the turning part (2) and coupled together by a coaxial link (30, 31, 32) arranged in an axial conduit passing through the fixed and turning parts (1, 2) along the axis of rotation Δ, the said coaxial link being provided with a conducting core (30) which has a first end fixed in the turning part (2) and a second end sliding in rotation in the fixed part (1), and which has a channel passing longitudinally through it from end to end along the axis of rotation Δ; an optical fibre (4) integral with the turning part (2) which extends into the said axial channel of the conducting core (30) of the coaxial link at least as far as the said second end of the conducting core which slides in rotation in the fixed part; and an optical coupling means (9, 7) which is integral with the fixed part (1) and which is centred on the axis of rotation Δ facing the end of the optical fibre (4) situated in the vicinity of the said second end of the conducting core sliding in rotation in the fixed part.

2. Turning joint according to Claim 1, in which the said optical coupling means includes an optical fibre (7) integral with the fixed part (1), one end of which faces the end of the optical fibre (4) integral with the turning part (2).

3. Turning joint according to Claim 2, in which two optical coupling lenses (8, 9) are interposed between the facing ends of the optical fibres (4, 7) respectively integral with the turning and fixed parts (2, 1).

4. Turning joint according to Claim 3, in which the optical coupling lens (8) arranged in front of the end of the optical fibre (4) which is integral with the turning part (2) is carried by a hollow rod (35, 36) extending the coaxial link (30, 31, 32) towards the fixed part (1).

5. Turning joint according to Claim 4, in which the hollow rod consists of an insulating sleeve (35) inserted by its end into the coaxial link (30, 31, 32) and of a hollow end part (36) inserted by its end into the insulating sleeve (35) and fixed to the latter by a clamping ring (38).

6. Turning joint according to Claim 5, in which the hollow end part (36) inserted by its end into the insulating sleeve (35) extending the coaxial link (30, 31, 32) encloses a tubular centring piece (42) guiding the end of the optical fibre (4) which is integral with the turning part (2) on the axis of the said optical coupling lens (8).

7. Turning joint according to Claim 3, in which the optical coupling lens (9) arranged in front of the end of the optical fibre (7) which is integral with the fixed part (1) is carried by a hollow end part (43) which is inserted into an anchoring piece (44) fixed to the fixed part (1) by means of a housing (6) and which encloses a tubular centring piece (45) guiding the end of the optical fibre (7) which is integral with the fixed part (1) on the axis of the said optical coupling lens (9).
